# EUROPEAN PATENT SPECIFICATION

(11) **EP 2 280 270 B1**
(45) Date of publication and mention of the grant of the patent: **02.09.2015**
(21) Application number: 10171195.0
(22) Date of filing: 29.07.2010
(51) Int. Cl.: G01N 21/88, G01N 21/95

(54) **Optical detection system of surface defects of an O-ring.**
Optisches Detektionssystem von Oberflächendefekten eines O-Rings.
Système de détection optique des défauts de surface d'un joint torique.

(30) Priority: 29.07.2009 IT MI20091351
(43) Date of publication of application: 02.02.2011
(73) Proprietor: UTPVision S.r.l., 24044 Dalmine (IT)
(72) Inventor: Finazzi, Roberto, 24060 Bolgare (IT)
(74) Representative: Borsano, Corrado

(56) References cited:
- EP-A2- 0 730 147
- DE-A1- 3 641 862
- DE-C1- 19 726 967
- FR-A- 2 675 903
- US-A- 4 634 273
- US-A- 5 684 530
- US-A1- 2002 029 125

## Description

### FIELD OF THE INVENTION

The present invention falls within the scope of the production of optical detection systems of defects on gaskets. The invention relates to an optical detection system of surface defects of O-rings.

### STATE OF THE ART

Prior art used to detect, for the purposes of quality control, surface defects of O-rings, provides for the use of illumination systems and photographic or video filming systems of an illuminated gasket capable of automatically detecting the presence of surface defects and roughnesses. Typically, this technique is applied both to control the larger surfaces of the gasket (called surface views), and to control the lateral surfaces (called side views), at the closing edges of the mould inside which the object to be examined was produced. Through the side views it is possible to identify very critical defects in proximity of the mould closing line, called parting line defects.

The most complex gaskets to be inspected include O-rings, which have a toroidal shape. Due to the presence of inner and outer surfaces and to the presence of variable curvatures of the perimeter surfaces thereof, these are particularly complicated to illuminate, owing to the generation of annoying reflections that can blind the video camera system.

Moreover, prior art aims at illuminating in as diffused and homogeneously a manner possible the object to be inspected with monochromatic light, generally white or red. For this purpose, circular illuminators with reflected and diffused light have been designed. An example of the prior art illuminators is given in US5684530, whom features are disclosed in the preamble of the claim 1.

Prior art teaches the detection of an imperfection from analysing the illumination of the image of the object to be inspected. In particular, when a non-uniformity of illumination is detected, this means that a surface imperfection is present, which causes the formation of a small shadow. Therefore, the main problem that can occur in this field is that for certain types of gasket to be inspected, especially those having a very reflective surface, it is not possible to clearly highlight the surface defects even by regulating the light intensity of the various illuminators present. This is because the illuminators could illuminate the object in too uniform a manner, to the degree that the system of video cameras is unable to appreciate said shadow.

### SUMMARY OF THE INVENTION

The object of the present invention is to provide an optical detection device of surface defects adapted to solve the aforesaid problem both for surface views and for side views.

The subject matter of the present invention is therefore an optical detection device of surface defects of an O-ring, in conformity with claim 1. In particular, the device according to the invention comprises a first monochromatic light source according to a first wavelength to illuminate the O-ring to be examined according to a first direction. The device also comprises a second monochromatic light source according to a second wavelength to illuminate the O-ring according to a second direction distinct from the first direction. The device also comprises optical detection means to film the O-ring to be inspected and to detect variations in colour. With regard to the light source, in the case of a device for surface view, this comprises:
- a lower part comprising a diffusing dome and a plurality of red LEDs, producing the first red light radiation, illuminating the dome in a manner such as to reflect the first light radiation onto the O-ring along the perimeter surfaces thereof and
- an upper part comprising a flat surface and a plurality of green LEDs, producing the second green light radiation, illuminating said flat surface, in a manner such as to reflect the second light radiation perpendicular with respect to the plane on which the O-ring lies.

Advantageously, by illuminating an object from different directions and with lights of different colours it is easy to identify sudden variations in colour corresponding to surface imperfections or defects, as will be explained in detail hereinafter.

A further object of the invention is to provide an optical detection method of surface defects of an O-ring adapted to solve the aforesaid problem.

The subject matter of the present invention is also an optical detection method of surface defects of an O-ring, in conformity with claim 6.

The dependent claims describe preferred embodiments of the invention, forming an integral part of the present description.

### BRIEF DESCRIPTION OF THE FIGURES

Further features and advantages of the invention will be more apparent in the light of the detailed description of preferred, but not exclusive, embodiments of an optical detection system of surface defects, illustrated by way of non-limiting example with the aid of the accompanying drawings, wherein:
- Fig. 1 represents the effect of illumination according to a surface view of an O-ring by means of two illuminators of different colour;
- Fig. 2 represents an enlargement of a detail of Fig. 1;
- Fig. 3 represents an illumination according to a side view of the O-ring;
- Fig. 4 represents the use of a single illuminator with two different light sources. The same reference numbers and letters in the figures identify the same element or components.

### DETAILED DESCRIPTION

The invention provides for the use of two light sources of different colour: red and green.

The optical detection means comprise at least a colour video camera capable of rendering, either directly or through a suitable Bayer filter, the intensity of the colour components of the primary colours, i.e. red, green and blue - RGB, of each pixel of the image taken of the object to be inspected.

An optical detection method in conformity with the present invention provides for the use of two light sources 2 and 3 of different colours illuminating the O-ring to be inspected according to two distinct directions. For greater effectiveness and improved colour separation, it is advantageous to use a first green light illuminator 2 and a second red light illuminator.

The purpose of this is to minimize overlapping of colour band between the light emitted from the two or more illuminators.

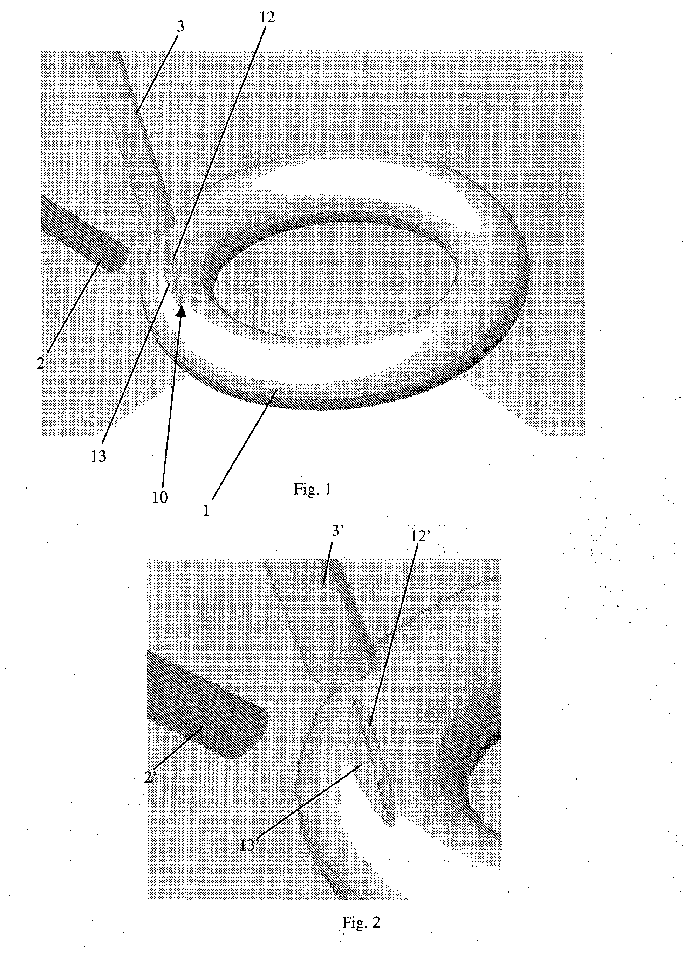

Fig. 1 and the relative enlargement of Fig. 2 show an example wherein a surface defect is illuminated by two different light illuminators, clearly showing the defect by virtue of the colour separation obtained. In particular, it is noted that the first portion 12 or 12' of a scratch is illuminated prevalently by the illuminator 2, while the second portion 13 or 13' of the same scratch is illuminated prevalently by the illuminator 3.

If both illuminators were of the same type, then it would be impossible to detect any difference between the first portion 12 or 12' and the second portion 13 or 13'. An automatic control system of O-rings can comprise one or more stations in which 100% inspection is performed on the gaskets produced.

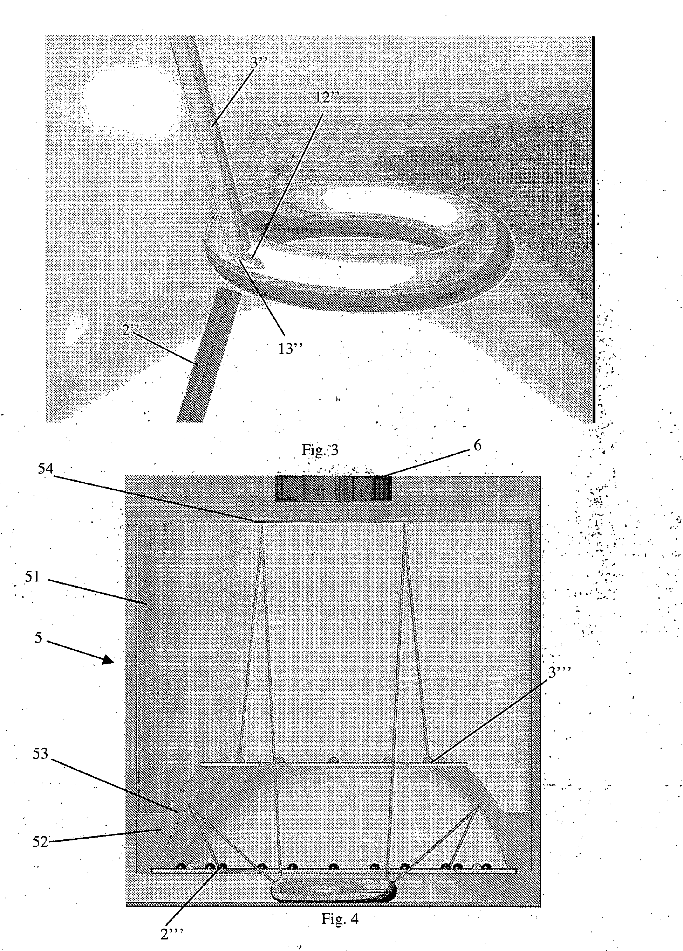

Typically, there is a first station that performs an examination of at least one of the two surface views of the gasket, as shown in Figs. 1 and 2, while a second station performs an inspection of the side-perimeter surface of the same gasket, as shown in Fig. 3.

Therefore, the same method is applied without distinction to both inspection stations, using an upper illuminator 3", for example green light, and a lower illuminator 2", for example red light.

Also in this case the number of portions of a scratch equal to the number of illuminators of different colour are illuminated in a different manner, standing out considerably and making it much simpler to recognise a surface imperfection.

According to another aspect of the present invention, less selective pixel colour recognition techniques can be used, avoiding the detection of false negatives, i.e. avoiding the detection of a defect where there is no surface defect. In fact, this problem depends on the fact that by using a single type of light source, a defect is detected when two nearby pixels have a very small difference in light intensity, while the present method is based on a large difference in colour between nearby pixels rather than different lighting in proximity of a surface defect.

According to a preferred embodiment relative to the surface views, a double illuminator 5 is used, reproduced according to a cross section in Fig. 4, wherein a lower part 52 of the illuminator comprises a diffusing dome 53 and a plurality of red LEDs 2"' which illuminate the dome 53 adapted to reflect light onto the O-ring to be inspected according to a first angle, in a manner such as to illuminate the gasket uniformly along the perimeter. The upper part 51 of the double illuminator comprises a flat reflecting surface 54 and a plurality of green LEDs 3"' whose light is reflected by the flat surface which reflects said rays in a manner perpendicular with respect to the plane on which the gasket lies.

The lower and upper part of the double illuminator are therefore overlapped and during operation are aligned with the O-ring. In particular, as can be seen from Fig. 4, the upper opening of the dome is such as to allow passage of the radiation reflected from the flat reflecting surface. Moreover, also the reflecting surface is partly perforated or transparent in a manner such that a video camera 6 can film the O-ring through the illuminator 5 according to the direction of the green radiation which preferably coincides with the axis of rotation of the toroid defined by the O-ring.

The reason for this juxtaposition will be explained hereinafter.

Although good results are obtained with any colour of illuminators, also in the non visible light, according to a preferred configuration it is preferable to use green light to frontally illuminate the preponderant surfaces of an object to be inspected as colour video cameras with Bayer filter have double the number of pixels sensitive to green light compared to the pixels sensitive to red light, and therefore it is preferable for the green illuminator to illuminate the larger surfaces or those for which greater visual accuracy is required, which reflects on greater accuracy in the inspection process of the object to be inspected.

Therefore, it is clear that if the green radiation illuminates the O-ring frontally, i.e. coaxial with its axis of rotation, then the red light illuminates the perimeter of the gasket.

The combined use of a Bayer filter and two colours red/green, as described above, allow extraordinary results to be achieved. Tests performed showed that with said configuration the recognition rate of defects is 20% higher compared to any other combination of primary colours.

The advantages deriving from application of the present invention are therefore apparent.

The elements and the features illustrated in the various preferred embodiments can be combined without however departing from the scope of protection of the present application.

## Claims

1. An optical detection device of surface defects of an O-ring (1) which lies on a plane comprising a first monochromatic light source (2,2',2",2"') according to a first wavelength adapted to illuminate said O-ring according to a first direction a second monochromatic light source (3,3',3",3"') according to a second wavelength adapted to illuminate said O-ring (1) according to a second direction distinct from said first direction and optical detection means (6) adapted to film said object to be inspected and to detect variations in colour, said device comprises a double illuminator (5) **characterized in that** the double illuminator comprises
- a lower part (52) comprising a diffusing dome (53) and a plurality of red LEDs (2"'), producing a first red light radiation, illuminating said diffusing dome (53) in a manner such as to reflect said first red light radiation onto the O-ring (1) along the side-perimeter surface thereof and
- an upper part (51) comprising a flat surface (54) and a plurality of green LEDs (3"'), producing a second green light radiation, illuminating said flat surface (54), in a manner such as to reflect said second green light radiation perpendicular with respect to the plane on which the O-ring lies, such that said second green light radiation illuminates the O-ring frontally.

2. The device according to claim 1, wherein said diffusing dome (53) and said flat surface (54) are partly open or partly transparent in a manner such that said optical detection means (6) film the O-ring through the double illuminator (5), according to the direction defined by said second green light radiation.

3. The device according to claim 2, wherein the axis of rotation of the toroid defined by the O-ring is coaxial with said direction defined by said second green light radiation.

4. The device according to claim 1, wherein said optical detection means (6) comprise at least one video camera capable of acquiring, directly or through a Bayer filter, the intensity of said monochromatic light radiations.

5. The device according to claim 4, wherein said video camera is a colour video camera.

6. An optical detection method of surface defects of an O-ring (1), comprising a step of illuminating and filming the O-ring (1) through an optical device according to one of the preceding claims.

7. The detection method according to claim 6, comprising the step of positioning said O-ring (1) in a manner such that the second green light radiation illuminates the O-ring frontally, for which greater visual accuracy is required.

8. The detection method according to claim 7, further comprising the step of positioning said O-ring with the axis of rotation coaxial with the direction of illumination of said second green light radiation.

## Patentansprüche

1. Optische Detektionsvorrichtung von Oberflächendefekten eines auf einer Ebene liegenden O-Ringes (1), welche umfasst: eine erste monochromatische Lichtquelle (2, 2', 2", 2"') mit einer ersten Wellenlänge, wobei diese erste Lichtquelle so ausgelegt ist, dass sie den genannten O-Ring in einer ersten Richtung beleuchtet, und eine zweite monochromatische Lichtquelle (3, 3', 3", 3"') mit einer zweiten Wellenlänge, wobei diese zweite Lichtquelle so ausgelegt ist, dass sie den genannten O-Ring (1) in einer zweiten Richtung beleuchtet, welche von der genannten ersten Richtung verschieden ist, sowie optische Detektionsmittel (6), welche so ausgelegt sind, dass sie das genannte, zu untersuchende Objekt filmen und Farbänderungen feststellen, wobei die genannte Vorrichtung einen doppelten Illuminator (5) umfasst,
**dadurch gekennzeichnet, dass** der doppelte Illuminator umfasst:
- einen unteren Teil (52), welcher einen Streulichtdom (53) und eine gewisse Anzahl von roten LEDs (2"') umfasst, welche eine erste, rote Lichtstrahlung erzeugen, mit welcher der genannte Streulichtdom (53) in einer Weise beleuchtet wird, dass die genannte erste, rote Lichtstrahlung auf den O-Ring (1) längs dessen Seitenumfangsfläche reflektiert wird, und
- einen oberen Teil (51), welcher eine ebene Oberfläche (54) und eine gewisse Anzahl von grünen LEDs (3"') umfasst, welche eine zweite, grüne Lichtstrahlung erzeugen, mit welcher die genannte ebene Oberfläche (54) in einer Weise beleuchtet wird, dass die genannte zweite, grüne Lichtstrahlung rechtwinklig zu der Ebene, auf welcher der O-Ring liegt, dergestalt reflektiert wird, dass der O-Ring von der genannten zweiten, grünen Lichtstrahlung frontal beleuchtet wird.

2. Vorrichtung nach Anspruch 1, bei welcher der genannte Streulichtdom (53) und die genannte ebene Oberfläche (54) dergestalt teilweise offen oder teilweise transparent sind, dass das genannte optische Detektionsmittel (6) den O-Ring durch den doppelten Illuminator (5) hindurch in der Richtung filmt, welche durch die genannte zweite, grüne Lichtstrahlung festgelegt wird.

3. Vorrichtung nach Anspruch 2, bei welcher die Rotationsachse des durch den O-Ring festgelegten Toroids zu der genannten Richtung, welche durch die genannte zweite, grüne Lichtstrahlung festgelegt ist, koaxial ist.

4. Vorrichtung nach Anspruch 1, bei welcher die genannten optischen Detektionsmittel (6) mindestens eine Videokamera umfassen, welche imstande ist, auf direktem Wege oder über einen Bayer-Filter die Intensität der genannten monochromatischen Lichtstrahlungen zu erfassen.

5. Vorrichtung nach Anspruch 4, bei welcher die genannte Videokamera eine Farb-Videokamera ist.

6. Optisches Detektionsverfahren von Oberflächendefekten eines O-Ringes (1), welches den Schritt der Beleuchtung und des Filmens des O-Ringes (1) durch eine optische Vorrichtung gemäß einem der vorangehenden Ansprüche umfasst.

7. Detektionsverfahren nach Anspruch 6, welches den Schritt der Positionierung des genannten O-Ringes (1) in einer Weise umfasst, dass der O-Ring von der zweiten, grünen Lichtstrahlung frontal beleuchtet wird, wofür eine höhere visuelle Genauigkeit erforderlich ist.

8. Detektionsverfahren nach Anspruch 7, welches außerdem den Schritt der Positionierung des genannten O-Ringes mit der Rotationsachse koaxial zur Beleuchtungsrichtung der genannten zweiten, grünen Lichtstrahlung umfasst.

## Revendications

1. Dispositif de détection optique de défauts de surface d'un joint torique (1) qui se trouve sur un plan comprenant une première source lumineuse monochromatique (2, 2', 2", 2"') selon une première longueur d'onde apte à illuminer ledit joint torique dans un premier sens et une deuxième source lumineuse monochromatique (3, 3', 3", 3"') selon une deuxième longueur d'onde apte à illuminer ledit joint torique (1) dans un deuxième sens distinct dudit premier sens et un moyen de détection optique (6) apte à filmer ledit objet à inspecter et à détecter des variations de couleur, ledit dispositif comprend un double illuminateur (5), **caractérisé en ce que** le double illuminateur comprend :
- une partie inférieure (52) comprenant un dôme de diffusion (53) et une pluralité de LED rouges (2"'), produisant un premier rayonnement lumineux rouge, illuminant ledit dôme de diffusion (53) de manière à réfléchir ledit premier rayonnement lumineux rouge sur le joint torique (1) le long de la surface de périmètre de côté de celui-ci, et
- une partie supérieure (51) comprenant une surface plate (54) et une pluralité de LED vertes (3"'), produisant un deuxième rayonnement lumineux vert illuminant ladite surface plate (54) de manière à réfléchir ledit deuxième rayonnement lumineux vert perpendiculaire au plan sur lequel se trouve le joint torique, de sorte que ledit deuxième rayonnement lumineux vert illumine le joint torique frontalement.

2. Dispositif selon la revendication 1, dans lequel ledit dôme de diffusion (53) et ladite surface plate (54) sont partiellement ouverts ou partiellement transparents de telle manière que ledit moyen de détection optique (6) filme le joint torique à travers le double illuminateur (5) dans le sens défini par ledit deuxième rayonnement lumineux vert.

3. Dispositif selon la revendication 2, dans lequel l'axe de rotation du tore défini par le joint torique est coaxial audit sens défini par ledit deuxième rayonnement lumineux vert.

4. Dispositif selon la revendication 1, dans lequel ledit moyen de détection optique (6) comprend au moins une caméra vidéo capable d'acquérir, directement ou par l'intermédiaire d'un filtre Bayer, l'intensité desdits rayonnements lumineux monochromatiques.

5. Dispositif selon la revendication 4, dans lequel ladite caméra vidéo est une caméra vidéo couleur.

6. Procédé de détection optique de défauts de surface d'un joint torique (1), comprenant une étape d'illumination et de filmage du joint torique (1) par l'intermédiaire d'un dispositif optique selon l'une des revendications précédentes.

7. Procédé de détection selon la revendication 6, comprenant l'étape du positionnement dudit joint torique (1) de telle manière que le deuxième rayonnement lumineux vert illumine le joint torique frontalement, pour lequel une précision visuelle supérieure est requise.

8. Procédé de détection selon la revendication 7, comprenant en outre l'étape du positionnement dudit joint torique avec l'axe de rotation coaxial au sens d'illumination dudit deuxième rayonnement lumineux vert.
